# EUROPEAN PATENT APPLICATION

(11) **EP 1 605 351 A1**
(43) Date of publication of application: **14.12.2005**
(21) Application number: 04031051.8
(22) Date of filing: 30.12.2004
(51) Int. Cl.: G06F 9/445, G06F 17/30

(54) **Apparatus and method for creating a binary file for function-based data storage and a computer-readable storage medium for storing the method**

(30) Priority: 07.06.2004 KR 2004041487
(71) Applicant: SAMSUNG ELECTRONICS CO., LTD., Suwon-si, Gyeonggi-do (KR)
(72) Inventor: Kim, Suk-Soon, Suwon-si Gyeonggi-do (KR)
(74) Representative: Grünecker, Kinkeldey, Stockmair & Schwanhäusser Anwaltssozietät

(57) **Abstract**

A method and apparatus for creating a binary file for function-based data storage and a computer-readable recording medium storing the method are provided. Target files created based on functions thereof are converted to individual binary files. The individual binary files are combined to create a combined binary file. When the binary files are combined, invalid data of a specific size is inserted between each of the individual binary files. The use of a combined binary file created in this manner decreases the number of times data in a flash ROM is read/deleted/recorded when the corresponding program is updated. The invalid data insertion into the combined binary file to identify the individual binary files allows update of a changed part of the combined binary file, instead of the entirety thereof, when the corresponding program is updated.

## Description

The present invention relates to an apparatus and method for creating a binary file, and more particularly to an apparatus and method for creating a binary file for function-based data storage and a computer-readable storage medium for storing the method.

A mobile terminal generally includes an embedded system that generally stores read-only code and read-only data in a Read Only Memory (ROM) for executing a corresponding program. The code and data stored as binary images in the ROM. A description will now be given of the structure of a binary file used in the mobile terminal.

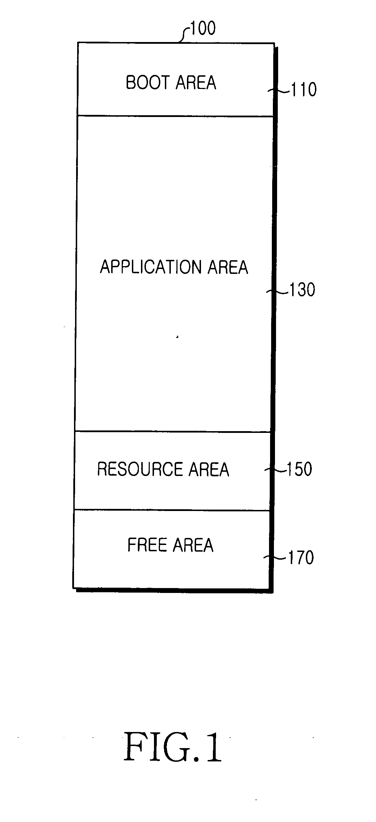

Fig. 1 is a diagram showing the structure of a conventional binary file 100. The conventional binary file 100 is generally divided into fewer than 10 binary file areas, for example, a boot area 110, an application area 130, a resource area 150 and a free area 170 managed by the file system. When the binary file 100 is used in the mobile terminal, instruction data required to boot the mobile terminal is positioned in the boot area 110. Data required to operate the mobile terminal, other than the data positioned in the boot area 110, is positioned in the application area 130. Data required to execute applications is positioned in the resource area 150. The free area 170 is a spare area for storing new data that will be added in the binary file 100.

As the functions of electronic products including mobile terminals are diversified and become more complex, the structure of software stored in the electronic products is growing increasingly complex and the size of the software is increasing. If a new function is added to an electronic product or if a function of the electronic product is modified, software related to the electronic product must be updated.

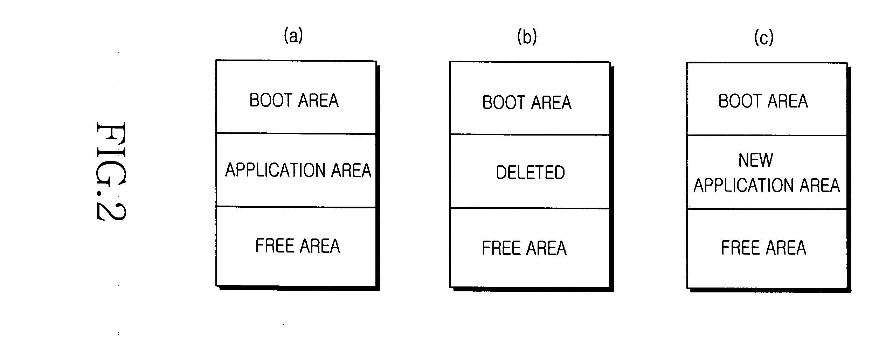

A conventional method for updating software (i.e., a binary file) will now be described with reference to Figs. 2a to 2c. Figs. 2a to 2c are diagrams showing how software is updated in the conventional method. In the conventional method for updating software used for an electronic product, the entirety of the software stored as a single image in a ROM is deleted and a new image is then recorded in the ROM.

For example, when software stored in a ROM as shown in Fig. 2a is updated, the entirety of the software stored in the ROM must first be deleted. This is because application data items of the software, all of which are formed as a single image, interact with each other. Accordingly, even when part of the software is updated, new application data items must be stored in the ROM as shown in Fig. 2c, after all of the application data items, which were stored in the application area, as shown in Fig. 2a, are deleted, as shown in Fig. 2b.

The conventional update method may be effective for small-size software, but, taking into consideration the current tendency toward large-size software, it takes too long to update the software if part of the software to be updated is recorded in binary form, thereby making it difficult to achieve reliable software update.

Therefore, the present invention has been made in view of the above problem.

It is the object of the present invention to provide a binary file that can decrease software update time.

This object is solved by the subject matter of the independent claims.

Preferred embodiments are defined in the dependent claims.

It is an aspect of the present invention to provide an apparatus and method for creating a binary file for function-based data storage and a computer-readable storage medium for storing the method.

In accordance with one aspect of the present invention, the above and other objects can be accomplished by the provision of a method for creating a binary file for function-based data storage, the method including converting target files created based on functions thereof to individual binary files, respectively; and combining the individual binary files to create a combined binary file, wherein invalid data items of a specific size, into which invalid data is divided, are inserted between the individual binary files such that a corresponding invalid data item is inserted between each adjacent pair of the individual binary files.

In accordance with another aspect of the present invention, there is provided an apparatus for creating a binary file for function-based data storage, the apparatus including a target file converter for converting target files created based on functions thereof to individual binary files, respectively; an invalid data inserter for inserting invalid data items of a specific size, into which invalid data is divided, between the individual binary files such that a corresponding invalid data item is inserted between each adjacent pair of the individual binary files; and a binary file combiner for combining the individual binary files and the inserted invalid data.

In accordance with yet another aspect of the present invention, there is provided a computer-readable recording medium storing for instructions for controlling a processor to implement a method for creating a binary file for function-based data storage, the method including converting target files created based on functions thereof to individual binary files, respectively; and combining the individual binary files to create a combined binary file, wherein invalid data items of a specific size, into which invalid data is divided, are inserted between the individual binary files such that a corresponding invalid data item is inserted between each adjacent pair of the individual binary files.

The above and other objects, features and other advantages of the present invention will be more clearly understood from the following detailed description taken in conjunction with the accompanying drawings, in which:
Fig. 1 is a diagram showing the structure of a conventional binary file;
Figs. 2a to 2c are diagrams showing how software is updated in a conventional method;
Fig. 3 is a block diagram showing the configuration of an apparatus for creating a binary file for function-based data storage according to an embodiment of the present invention;
Fig. 4 is a flow chart showing a method for creating a binary file for function-based data storage according to an embodiment of the present invention; and
Fig. 5 is a diagram showing a binary file created in accordance with the method of the present invention described with reference to Fig. 4.

Now, preferred embodiments of the present invention will be described in detail with reference to the annexed drawings. In the drawings, the same or similar elements are denoted by the same reference numerals even though they are depicted in different drawings. In the following description, a detailed description of known functions and configurations incorporated herein will be omitted when it may make the subject matter of the present invention unclear.

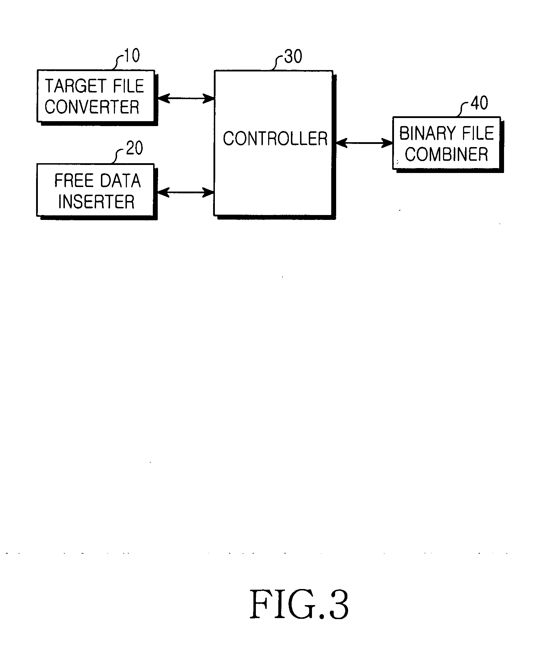

Fig. 3 is a block diagram showing the configuration of an apparatus for creating a binary file for function-based data storage according to an embodiment of the present invention. As shown in Fig. 3, the binary file creation apparatus includes a target file converter 10, an invalid data inserter 20, a controller 30 and a binary file combiner 40.

The target file converter 10 may comprise a linker, which converts target files, created based on their functions, into individual binary files under the control of the controller 30.

The invalid data inserter 20 inserts invalid data, divided into invalid data items of a specific size, between the converted individual binary files, such that a corresponding invalid data item of a plurality of invalid data items is inserted between each adjacent pair of the individual binary files. Null data defining the free area in Fig. 1 as a spare area of the binary file is preferably used for the invalid data. The invalid data is not used as actual data, but serves as a space (i.e., a hole) for identifying each of the binary files.

The controller 30 controls the overall operation of the binary file creation apparatus. The binary file combiner 40 combines the individual binary files and the inserted invalid data items to create a combined binary file.

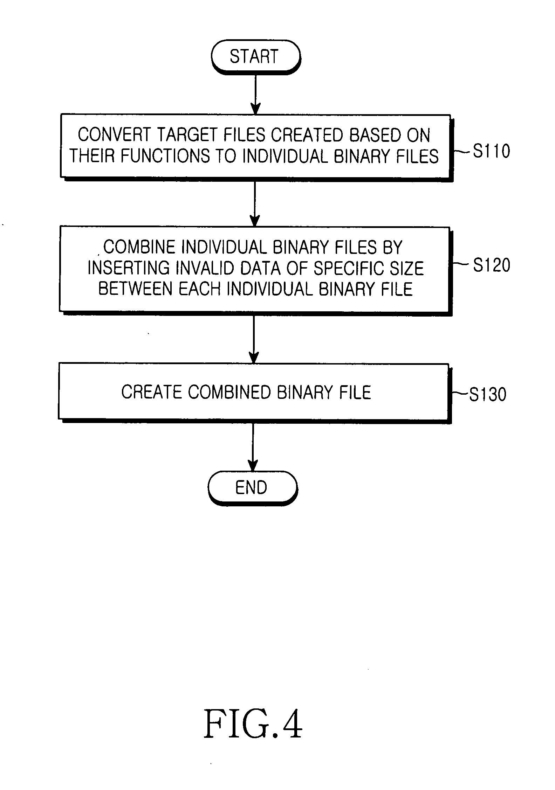

Fig. 4 is a flow chart showing a method for creating a binary file for function-based data storage according to an embodiment of the present invention. As shown in Figs. 3 and 4, in step S110 the target file converter 10 converts target files created based on their functions to individual binary files. The target file is a file into which a source file written in a computer language, e.g., C, is compiled so as to be readable by a specific device. For example, a source file is compiled into a target file stored as binary code, e.g., "0101010101". If the target files have been grouped together, the target file converter 10 classifies the target files based on their functions (for example, using a scatter file) and converts the classified target files respectively to individual binary files.

In step S120 the invalid data inserter 20 inserts invalid data, divided into invalid data items of a specific size, between the individual binary files, such that a corresponding invalid data item of the plurality of data items is inserted between each adjacent pair of the individual binary files. The specific size of each of the invalid data items differs according to both the number of the individual binary files and the size of each of the individual binary files. For example, if the number of the individual binary files is 10, the invalid data is divided into 10 invalid data items, and if the size of each of the individual binary files is 50K, the size of each of the invalid data items is preferably 5k (one tenth of 50K). In step S130 the binary file generator 30 combines the individual binary files and the inserted invalid data items to create a combined binary file.

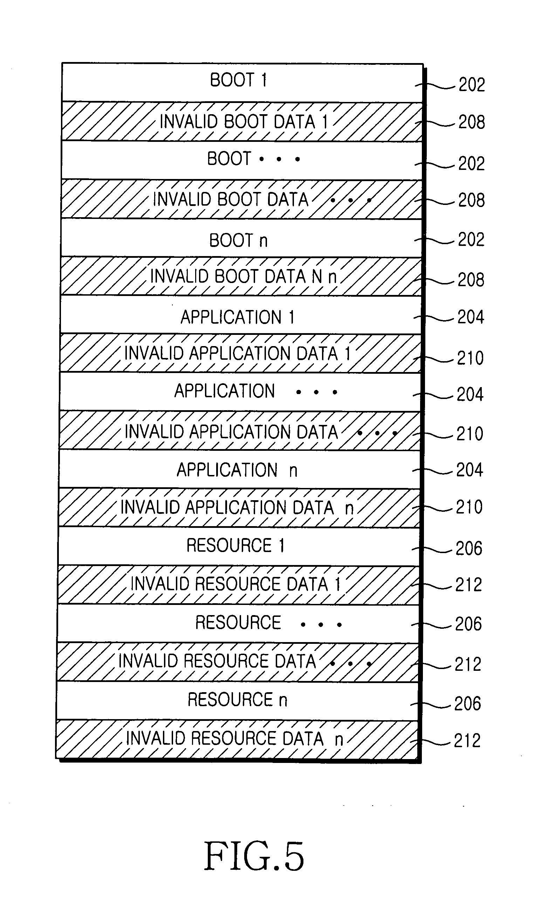

Fig. 5 is a diagram showing the binary file created according to the method described with reference to Fig. 4. The created binary file is shown as a combined binary file 200. As shown in Fig. 5, the combined binary file 200 includes n individual binary files that have been converted at step S110 of Fig. 4 and n invalid data items, each of which has been inserted between a corresponding adjacent pair of the individual binary files at step S120 (Fig. 4).

Specifically, as shown in Fig. 5, the combined binary file 200 includes different sets of n individual binary files, for example, n individual boot binary files 202, n individual application binary files 204 and n individual resource binary files 206. It also includes different sets of n invalid data items, for example, n invalid boot data items 208, n invalid application data items 210 and n invalid resource data items 212.

As null data, the invalid data items define the free area in Fig. 1 and serve to identify or discriminate the individual binary files when updating the combined binary file 200, thereby allowing partial update thereof.

The method described above according to the present invention can be embodied as a program and stored in a computer-readable form in a recording medium, for example, a compact disk (CD), a digital video disk (DVD), a random access memory (RAM,) a floppy disk, a hard disk and a magneto-optical disc).

As apparent from the above description, the present invention provides an apparatus and method for creating a binary file for function-based data storage and a computer-readable storage medium storing the method, which have the following features and advantages. The use of a combined binary file created according to the present invention decreases the number of times data in a flash ROM is read/deleted/recorded when a corresponding program is updated. In addition, the use of a combined binary file into which invalid data is inserted to identify individual binary files of the combined binary file according to the present invention makes it possible to update a changed part of the combined binary file, instead of the entirety thereof, when a corresponding program is updated.

Although the preferred embodiments of the present invention have been disclosed for illustrative purposes, those skilled in the art will appreciate that various modifications, additions and substitutions are possible, without departing from the scope of the invention as disclosed in the accompanying claims. Accordingly, the scope of the present invention should not be limited to the above embodiments, but should be defined by the accompanying claims.

## Claims

1. A method for creating a binary file for function-based data storage, the method comprising the steps of:
a) converting target files created based on functions thereof into individual binary files, respectively; and
b) combining the individual binary files to create a combined binary file,
wherein a plurality of invalid data items of a specific size, into which invalid data is divided, are inserted between the individual binary files such that a corresponding invalid data item is inserted between each adjacent pair of the individual binary files.

2. The method according to claim 1, wherein the specific size of each of the invalid data items is previously determined to be suitable for inclusion thereof in the combined binary file.

3. The method according to claim 2, wherein the specific size of each of the invalid data items is set according to the number of the individual binary files and the size of each of the individual binary files.

4. The method according to one of claims 1 to 3, wherein the conversion is performed by a target file converter.

5. The method according to one of claims 1 to 4, wherein step b) further includes the step of classifying the target files based on the functions thereof if the target files have been grouped together.

6. An apparatus for creating a binary file for function-based data storage, the apparatus comprising:
a target file converter for converting target files created based on functions thereof into individual binary files, respectively;
an invalid data inserter for inserting a plurality of invalid data items of a specific size, into which invalid data is divided, between the individual binary files such that a corresponding invalid data items is inserted between each adjacent pair of the individual binary files; and
a binary file combiner for combining the individual binary files and the inserted invalid data.

7. The apparatus according to claim 6, wherein the specific size of each of the invalid data items is previously determined to be suitable for inclusion in the combined binary file.

8. The apparatus according to claim 7, wherein the specific size of each invalid data item differs according to the number of the individual binary files and the size of each of the individual binary files.

9. The apparatus according to one of claims 6 to 8, wherein the target file converter classifies the target files based on the functions thereof, if the target files have been grouped together, and converts the classified target files, respectively, to individual binary files.

10. The apparatus according to one of claims 6 to 9, wherein the target file converter comprises a linker.

11. A computer-readable recording medium storing instructions for controlling a processor to implement a method for creating a binary file for function-based data storage, the method comprising the steps of:
a) converting target files created based on functions thereof to individual binary files; and
b) combining the individual binary files to create a combined binary file,
wherein a plurality of invalid data items of a specific size, into which invalid data is divided, are inserted between the individual binary files such that a corresponding invalid data items is inserted between each adjacent pair of the individual binary files.

12. The medium according to claim 11, wherein step b) further includes the step of classifying the target files based on the functions thereof if the target files have been grouped together.
